# FASCICULE DE BREVET EUROPEEN

(11) **EP 4 301 273 B1**
(45) Date de publication et mention de la délivrance du brevet: **07.05.2025**
(21) Numéro de dépôt: 22707520.7
(22) Date de dépôt: 01.03.2022
(51) Int. Cl.: A61C 8/00

(54) **DISPOSITIF PROTHETIQUE DENTAIRE**
ZAHNPROTHESENVORRICHTUNG
DENTAL PROSTHETIC DEVICE

(30) Priorité: 02.03.2021 FR 2102018
(43) Date de publication de la demande: 10.01.2024
(73) Titulaire: BIOTECH DENTAL, 13300 Salon-de-Provence (FR)
(72) Inventeur: BREYSSE, Pascal, 69210 Saint-Germain-Nuelles (FR)
(74) Mandataire: Hautier IP
(86) Numéro de dépôt international: PCT/IB2022/051777
(87) Numéro de publication internationale: WO 2022/185193

(56) Documents cités:
- CN-A- 112 315 603
- FR-A1- 3 053 884
- US-A- 5 006 069
- US-A1- 2012 295 223

## Description

### Domaine technique

La présente invention se rapporte à un dispositif prothétique dentaire comprenant un implant destiné à être rapporté dans un os d'une gencive d'un patient, un pilier rapporté sur l'implant et une coiffe qui est pourvue d'une prothèse et qui est destinée à être fixée sur le pilier. Elle a pour objet un tel dispositif prothétique dentaire.

### Etat de la technique antérieure

Les documents FR 3 053 884, US 2012/0295223, US 5,006,069 et CN 112315603 décrivent respectivement un dispositif prothétique dentaire comprenant un implant, une coiffe et un pilier interposé entre l'implant et la coiffe. Le pilier comprend une tête de pilier qui est équipée de moyens de rétention de la coiffe. Le pilier comprend aussi un corps de pilier qui est pourvu de moyens de fixation sur l'implant. Les moyens de rétention comprennent des moyens d'emboîtement de la tête de pilier à l'intérieur d'une cavité ménagée à l'intérieur de la coiffe.

Les moyens de rétention des dispositifs prothétiques dentaires décrits par les documents FR 3 053 884 et US 2012/0295223 sont exempts de moyens de vissage de la coiffe sur la tête de pilier. Il en résulte que ces moyens de rétention sont exclusivement constitués de moyens d'emboîtement ce qui s'avère insuffisant pour garantir une fixation solide et pérenne de la coiffe sur la tête de pilier. De plus, de nombreux praticiens souhaitent disposer de moyens de rétention par vissage de la coiffe sur la tête de pilier en raison d'habitudes prises dans le domaine et d'un confort de mise en place de la coiffe sur la tête de pilier. Ce moyen de rétention est plutôt destiné à des restaurations de prothèse provisoires ou de prothèse amovible. Le moyen de rétention par vissage lui est destiné à des restauration de prothèse fixe définitive.

Les moyens de rétention des dispositifs prothétiques dentaires décrits par les documents US 5,006,069 et CN 112315603 associent des moyens d'emboîtement de la tête de pilier à l'intérieur d'une cavité ménagée à l'intérieur de la coiffe et des moyens de vissage de la coiffe sur la tête de pilier.

La coiffe décrite par le document US 5,006,069 comporte une face interne de coiffe qui est totalement tronconique et qui est plaquée contre une face externe de pilier que comporte la tête de pilier. Autrement dit, la face interne de coiffe et la face externe de pilier sont jointives sur toute une hauteur de la tête de pilier. Autrement dit encore, la face interne de coiffe et la face externe de pilier sont emboîtées en contact étroit sur toute la hauteur de la tête de pilier. Un tel emboîtement présente l'inconvénient de générer des efforts de friction importants lors de la mise en place de la coiffe sur la tête de pilier par le praticien jusqu'à rendre impossible dans certains cas un tel emboîtement, notamment si des tolérances dimensionnelles inhérentes à un tel emboitement en force ne sont pas ou peu respectés. Par ailleurs, même si un angle de la partie tronconique est suffisamment ouvert pour réduire ou annuler les efforts de friction on observe que ce dispositif ne comporte pas de système d'indexation du pilier par rapport à l'implant et du pilier par rapport à la coiffe. De plus, le pilier est vissé sur l'implant et non transvissé avec une vis de pilier. Un tel dispositif prothétique dentaire mérite donc d'être amélioré.

La coiffe décrite par le document CN 112315603 comporte une face interne de coiffe comprenant une zone supérieure de la face interne de coiffe qui est tronconique et une zone inférieure de la face interne de coiffe qui est cylindrique. La zone supérieure de la face interne de coiffe est plaquée contre une portion supérieure de la face externe de pilier que comporte la face externe de pilier, tandis que la zone inférieure de la face interne de coiffe est totalement disposée à distance d'une portion inférieure de la face externe de pilier que comporte également la face externe de pilier. Il en résulte un emboîtement minimaliste de la coiffe sur la tête de pilier, la portion supérieure de la face externe de pilier étant notoirement d'une hauteur inférieure à une hauteur de la portion inférieure de la face externe de pilier, de telle sorte que l'emboîtement de la coiffe sur la tête de pilier est extrêmement réduit et quasi réduit à néant. Un tel dispositif prothétique dentaire mérite donc d'être amélioré.

### -Exposé de l'invention

Un but de la présente invention est de proposer un dispositif prothétique dentaire comprenant un implant destiné à être rapporté dans un os d'une gencive d'un patient, un pilier prévu pour être rapporté sur l'implant et une coiffe qui est éventuellement pourvue d'une prothèse dentaire et qui est destinée à être fixée sur le pilier, la coiffe étant indifféremment une coiffe de cicatrisation ou bien une coiffe définitive équipée d'une prothèse définitive. On comprend que la coiffe de cicatrisation est prévue pour être installée sur le pilier et l'implant de manière temporaire, par exemple pour une période de quelques semaines, notamment lors d'une phase de cicatrisation de la gencive autour de la coiffe de cicatrisation. Pendant cette période, la coiffe de cicatrisation doit être fixée de manière fiable sur le pilier et l'implant, sans risque de s'en échapper. Après cette période de cicatrisation, la coiffe de cicatrisation doit pouvoir être retirée aisément et rapidement sans altérer le pilier et/ou l'implant dentaire, de telle sorte que la coiffe de cicatrisation soit remplacée par une coiffe pourvue d'une prothèse. On comprend que la coiffe et la prothèse définitive sont prévues pour être installées pour une période longue, notamment de plusieurs années, voire dizaines d'années sur le pilier et l'implant dentaire.

On comprend ainsi qu'il est recherché le meilleur compromis entre un maintien ferme et fiable de la coiffe équipée de la prothèse sur le pilier et l'implant et une aisance au retrait de la coiffe de cicatrisation, notamment en vue de son remplacement par une prothèse définitive.

Un autre but de la présente invention est de proposer un dispositif prothétique dentaire offrant diverses possibilités d'utilisation à des praticiens qui ont des habitudes différentes les unes des autres pour installer le dispositif prothétique dentaire sur le patient.

Un dispositif de la présente invention est dispositif prothétique dentaire s'étendant principalement le long d'un axe d'allongement et comprenant au moins un implant, une coiffe et un pilier qui est interposé entre l'implant et la coiffe. Le pilier comprend un corps de pilier pourvu de moyens de fixation sur l'implant. Le pilier comprend une tête de pilier qui est délimitée au moins partiellement par une face externe de pilier. La tête de pilier est équipée de moyens de rétention de la coiffe. Les moyens de rétention comprennent des moyens d'emboîtement de la tête de pilier à l'intérieur d'une cavité. La cavité est ménagée à l'intérieur de la coiffe et est délimitée au moins partiellement par une face interne de coiffe. Les moyens de rétention comprennent des moyens de vissage de la coiffe sur la tête de pilier.

La face interne de coiffe est pourvue d'une patte qui est en contact contre la face externe de pilier, un espacement étant ménagé axialement entre un point de contact de la face interne de coiffe et un rebord de cône de la face interne de coiffe. L'espacement étant ménagé radialement entre la face externe de pilier et la face interne de coiffe.

Selon la présente invention la patte s'étend axialement depuis une extrémité inférieure de coiffe jusqu'à un point de contact de la face interne de coiffe et l'espacement est ménagé axialement entre le point de contact et un rebord de cône de la face interne de coiffe.

Ces dispositions sont telles que la patte est en appui contre la face externe de pilier pour maintenir la coiffe sur la tête de pilier, l'espacement évitant un contact entre la face interne de coiffe et la tête de pilier sur toute une hauteur de la tête de pilier. On comprend qu'on obtient ainsi un premier meilleur compromis possible entre une facilité de mise en place de la coiffe sur la tête de pilier et un maintien optimisé de la coiffe sur la tête de pilier, ce maintien étant conforté par les moyens de vissage de la coiffe sur la tête de pilier. On comprend qu'on obtient aussi un deuxième meilleur compromis possible entre des moyens de vissage robustes qui compensent une moindre rétention par emboîtement en raison de l'espacement, la présence de l'espacement facilitant la mise en place de la coiffe sur la tête de pilier.

Le dispositif prothétique dentaire comprend avantageusement l'une quelconque au moins des caractéristiques suivantes, prises seules ou en combinaison :
- la patte s'étend radialement autour de l'axe d'allongement du dispositif prothétique dentaire et s'étend axialement depuis une extrémité inférieure de coiffe jusqu'au point de contact. On comprend que la patte forme ainsi une rampe de guidage de la coiffe lors de la mise en place par emboîtement de la coiffe sur la tête de pilier,
- la patte forme un organe d'étanchéité entre la coiffe et la tête de pilier, l'organe d'étanchéité étant agencé pour éviter à des salissures de s'insérer entre la coiffe et la tête de pilier. On comprend en cela que la patte débute en l'extrémité inférieure de coiffe pour éviter un bourrage alimentaire entre la coiffe et la tête de pilier notamment,
- le point de contact est ménagé à une première distance de l'extrémité inférieure de coiffe qui est inférieure à une deuxième distance prise entre l'extrémité inférieure de coiffe et le rebord de cône,
- la première distance est inférieure à une moitié de la deuxième distance,
- la première distance est inférieure à un quart de la deuxième distance,
- l'extrémité inférieure de coiffe jouxte une collerette qui délimite le corps de pilier et la tête de pilier,
- les moyens d'emboîtement comprennent un agencement tronconique de la tête de pilier et un agencement tronconique complémentaire de la cavité ménagée à l'intérieur de la coiffe,
- la tête de pilier est agencée au moins partiellement en une première portion de cône de conformation complémentaire à une deuxième portion de cône selon laquelle est agencée au moins partiellement la face interne de coiffe,
- la deuxième portion de cône s'étend axialement au moins entre l'extrémité inférieure de coiffe et le rebord de cône,
- la deuxième portion de cône s'étend axialement entre l'extrémité inférieure de coiffe et le point de contact,
- la première portion de cône s'étend axialement au moins entre la collerette et un bord de cône que comporte la face externe de pilier,
- la première portion de cône s'étend axialement entre la collerette et le point de contact,
- le bord de cône est disposé en vis-à-vis du rebord de cône,
- le bord de cône est en contact avec le rebord de cône,
- la tête de pilier comprend une couronne axiale qui s'étend axialement entre le bord de cône et une extrémité supérieure de pilier. On comprend que la couronne axiale est la partie supérieure de la tête de pilier qui surplombe notamment l'agencement conique de la tête de pilier,
- le pilier est formé d'un ensemble monobloc comprenant la tête de pilier et le corps de pilier,
- les moyens de vissage comprennent une vis de fixation de coiffe au moins partiellement logée à l'intérieur d'un canal axial de pilier que comporte le pilier,
- un premier diamètre minimal du canal axial de pilier est supérieur à un deuxième diamètre maximal de la vis de fixation de pilier,
- la vis de fixation de coiffe comprend une extrémité inférieure de vis de coiffe qui est pourvue d'un filetage de vis de coiffe coopérant avec un filetage de pilier qui est complémentaire au filetage de vis de coiffe et qui est ménagé sur une surface interne de pilier délimitant le canal axial de pilier,
- la vis de fixation de coiffe comprend une extrémité supérieure de vis de coiffe comportant une tête de vis de coiffe qui est en contact contre un épaulement de coiffe ménagé sur la face interne de coiffe,
- la vis de fixation de coiffe s'étend au moins partiellement à l'intérieur d'un canal axial de coiffe comprenant une zone supérieure qui loge la tête de vis de coiffe et qui est délimitée au moins partiellement par l'épaulement de coiffe,
- le canal axial de coiffe comprend une zone intermédiaire qui loge la couronne axiale et au moins un doigt radial que comporte la tête de pilier,
- la zone intermédiaire est interposée entre la zone supérieure et la cavité,
- la coiffe s'étend axialement entre une extrémité supérieure de coiffe et l'extrémité inférieure de coiffe, l'extrémité supérieure de coiffe étant pourvue d'une ouverture supérieure de coiffe qui est conformée pour permettre une introduction de la vis de fixation de coiffe à l'intérieur du canal axial de coiffe qui s'étend axialement entre l'extrémité supérieure de coiffe et l'extrémité inférieure de coiffe et qui comprend la cavité,
- le canal axial de coiffe comprend une zone supérieure qui est destinée à loger la tête de vis de coiffe et qui est délimitée au moins partiellement par l'épaulement de coiffe,
- la zone supérieure surplombe une zone intermédiaire du canal axial de coiffe, la zone intermédiaire logeant la couronne axiale de la tête de pilier et le doigt radial,
- la zone intermédiaire est interposée entre la zone supérieure et la cavité,
- la coiffe est pourvue d'une prothèse,
- la prothèse est équipée d'un canal axial de prothèse qui s'étend axialement entre une face supérieure de prothèse et un orifice qui est conformé pour recevoir la coiffe,
- le canal axial de prothèse s'étend entre une ouverture supérieure de prothèse et l'orifice, le canal axial de prothèse comprenant une chambre qui surplombe la coiffe, la chambre étant agencée pour loger la tête de vis de coiffe lors d'une opération de dévissage de la vis de fixation de coiffe,
- un diamètre de canal pris orthogonalement à l'axe d'allongement entre deux points diamétralement opposés du canal axial de prothèse est inférieur à un diamètre de chambre pris orthogonalement à l'axe d'allongement entre deux points diamétralement opposés de la chambre,
- la coiffe comporte une face externe de coiffe qui est pourvue d'un méplat d'indexation destiné à indexer la prothèse sur la coiffe,
- la face interne de coiffe est pourvue d'au moins un organe apte à coopérer avec le doigt radial du piler pour indexer la coiffe sur le pilier.

Selon une autre approche de l'invention, le dispositif prothétique dentaire comprend avantageusement l'une quelconque au moins des caractéristiques suivantes, prises seules ou en combinaison :
- l'implant est destiné à être fixé, notamment par vissage ou analogue, à l'intérieur de l'os d'une gencive d'un patient. A cet effet, l'implant comporte une surface extérieure d'implant qui est pourvue d'au moins une rampe hélicoïdale de vissage,
- l'implant comprend un canal axial d'implant qui est débouchant à travers une surface supérieure d'implant et qui est non débouchant à travers une surface inférieure d'implant. Ainsi, le canal axial d'implant comporte une ouverture axiale d'implant à travers laquelle le corps de pilier s'étend pour être logé à l'intérieur du canal axial d'implant,
- la coiffe est indifféremment une coiffe de cicatrisation ou bien une coiffe équipée d'une prothèse. La coiffe de cicatrisation est destinée à être fixée temporairement et de manière amovible sur le pilier. On comprend que la coiffe de cicatrisation est prévue pour être fixée pour une courte période sur l'implant par l'intermédiaire du pilier. A titre d'exemple, une telle courte période est de l'ordre de quelques semaines. La coiffe de cicatrisation est notamment destinée à être remplacée par une coiffe définitive équipée d'une prothèse définitive prévue pour être installée au moins pour une pluralité d'années, voire de dizaine d'années,
- le pilier comprend le corps de pilier qui est prévu pour être logé à l'intérieur du canal axial d'implant et la tête de pilier qui est prévue pour émerger au-dessus de l'ouverture axiale d'implant,
- le corps de pilier et la tête de pilier s'étendent selon des axes respectifs qui sont confondus ou distincts,
- le pilier est équipé de moyens d'indexage du pilier à l'intérieur du canal axial d'implant,
- le pilier comprend une extrémité supérieure de pilier qui est agencée en une couronne axiale munie d'au moins un doigt radial prévu pour indexer un positionnement de la coiffe sur le pilier,
- le pilier loge un canal axial de pilier qui est débouchant à travers l'extrémité supérieure de pilier et une extrémité inférieure de pilier,
- le corps de pilier est rapporté sur l'implant par l'intermédiaire des moyens de fixation qui comprennent une vis de fixation de pilier prévue pour être logée à l'intérieur du canal axial de pilier afin de transvisser le pilier sur l'implant,
- les moyens d'emboîtement comprennent un agencement tronconique de la tête de pilier et un agencement tronconique complémentaire de la cavité ménagée à l'intérieur de la coiffe,
- on comprend que les moyens de rétention sont à la fois des moyens de rétention par contact étroit entre la tête de pilier et la cavité ménagée dans la coiffe qui sont agencés l'un et l'autre en des conformations tronconiques respectives complémentaires et par les moyens de vissage de la coiffe sur la tête de pilier. Autrement dit, la coiffe est maintenue de manière amovible sur la tête de pilier à la fois par les moyens de vissage de la coiffe sur la tête de pilier et par l'agencement en cône morse de la tête de pilier et de la cavité de la coiffe. On comprend encore que la coiffe est à la fois emmanchée et vissée sur le pilier à partir des moyens de rétention par emboîtement et par vissage qui coopèrent entre eux,
- la tête de pilier est agencée en une première portion de cône dont une section transversale tend à diminuer entre une collerette délimitant la tête de pilier et le corps de pilier, et une extrémité supérieure de pilier, ce qui confère à la tête de pilier un agencement tronconique,
- le pilier comprend la tête de pilier et le corps de pilier qui forment conjointement l'ensemble monobloc dans le sens où la tête de pilier et le corps de pilier ne sont dissociables l'un de l'autre qu'à partir d'une détérioration de l'un et/ou de l'autre. On comprend que le pilier, et donc la tête de pilier et le corps de pilier, sont par exemple obtenus par une seule opération d'usinage, de moulage, de fonderie ou analogue. Ainsi, le pilier est un continuum de matière entre la tête de pilier et le corps de pilier,
- le pilier est prévu pour être rapporté sur l'implant dentaire, notamment par vissage ou analogue,
- les moyens de vissage comprennent une vis de fixation de coiffe au moins partiellement logée à l'intérieur d'un canal axial de pilier que comporte le pilier,
- la vis de fixation de coiffe comprend une extrémité inférieure de vis de coiffe qui est pourvue d'un filetage de vis de coiffe coopérant avec un filetage de pilier qui est complémentaire au filetage de vis de coiffe et qui est ménagé sur une surface interne de pilier délimitant le canal axial de pilier,
- la vis de fixation de coiffe comprend une extrémité supérieure de vis de coiffe comportant une tête de vis de coiffe qui est en contact contre un épaulement de coiffe ménagé sur une face interne de coiffe, la face interne de coiffe délimitant au moins partiellement la cavité, la face interne de coiffe étant agencée au moins partiellement en une deuxième portion de cône de conformation complémentaire à la première portion de cône selon laquelle est agencée la tête de pilier,
- la vis de fixation de coiffe s'étend au moins partiellement à l'intérieur d'un canal axial de coiffe comprenant une zone supérieure qui loge la tête de vis de coiffe et qui est délimitée au moins partiellement par l'épaulement de coiffe, le canal axial de coiffe comprenant une zone intermédiaire qui loge une couronne axiale et au moins un doigt radial que comporte la tête de pilier, la zone intermédiaire étant interposée entre la zone supérieure et la cavité,
- la face interne de coiffe est pourvue d'une patte qui est prévue pour venir en contact contre une face externe de pilier et qui s'étend depuis une extrémité inférieure de coiffe jusqu'à un point de contact, le point de contact étant ménagé à une première distance de l'extrémité inférieure de coiffe qui est inférieure à une deuxième distance prise entre l'extrémité inférieure de coiffe et un rebord de cône que comprend la face interne de coiffe,
- un espacement est ménagé entre le point de contact et le rebord de cône entre la face externe de pilier et la face interne de coiffe,
- cet espacement réduit un contact entre la tête de pilier et la coiffe,
- l'association des moyens de vissage et des moyens d'emboîtement est avantageuse dans le sens où une diminution des moyens d'emboîtement à partir de la présence de l'espacement est compensée par la présence des moyens de vissage. Il en découle finalement une facilité de mise en place et une optimisation de fixation de la coiffe sur la tête de pilier, tout en garantissant une aisance de retrait de coiffe,
- la coiffe est pourvue d'une prothèse.

D'autres caractéristiques, détails et avantages de l'invention ressortiront plus clairement à la lecture de la description donnée ci-après à titre indicatif en relation avec des dessins.

### Brève description des figures

[Fig 1] - la figure 1 est une vue schématique en coupe d'un dispositif prothétique dentaire de la présente invention,
[Fig 2] - la figure 2 est une vue de détail du dispositif prothétique dentaire illustré sur la figure 1,
[Fig 3] - la figure 3 est également une vue de détail du dispositif prothétique dentaire illustré la figure 1,
[Fig 4] - la figure 4 est une vue en perspective éclatée d'une première variante d'une coiffe et d'une vis de fixation de coiffe constitutives du dispositif prothétique dentaire illustré les figures 1 à 3,
[Fig 5] - la figure 5 est une vue en perspective de dessous de la coiffe illustrée la figure 4,
[Fig 6] - la figure 6 est une vue en perspective d'un implant pourvu d'un pilier qui sont constitutifs du dispositif prothétique dentaire illustré sur les figures 1 à 3 et d'une gamme d'une deuxième variante de coiffe,
[Fig 7] - la figure 7 est une vue en perspective d'une variante du pilier illustré les figures 1 à 3 et 6.

Sur les figures, un dispositif prothétique dentaire et/ou des éléments constitutifs du dispositif prothétique dentaire sont représentés de telle sorte qu'un élément qualifié de « supérieur » est orienté vers le haut et un élément « inférieur » est orienté vers le bas. On comprend ainsi qu'un tel élément est plus particulièrement représenté comme s'il était affecté à une mâchoire inférieure d'un patient en position d'utilisation. On comprend également qu'un tel élément est susceptible d'être affecté à une mâchoire supérieure du patient en inversant le sens d'orientation. Il en découle que les qualificatifs « supérieur » et « inférieur » sont notamment à comprendre au regard de leur position relative sur les figures, le qualificatif « supérieur » étant affecté à un élément orienté vers le haut de la figure et le qualificatif « inférieur » étant affecté à un élément orienté vers le bas de la figure.

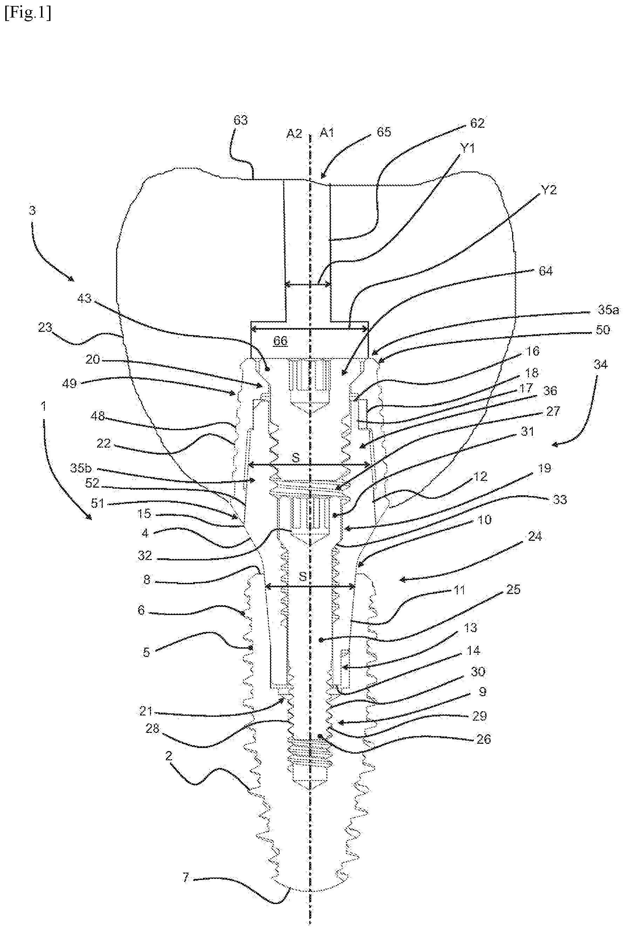

Sur la figure 1, un dispositif prothétique dentaire 1 de la présente invention est représenté assemblé en une position d'utilisation pour remplacer une dent du patient. Le dispositif prothétique dentaire 1 comprend au moins un implant 2, une coiffe 22 et un pilier 4 qui est interposé entre l'implant 2 et la coiffe 22. Le dispositif prothétique dentaire 1 s'étend principalement selon un axe d'allongement A1, qui forme par exemple un axe de révolution du dispositif prothétique dentaire 1.

Selon la variante illustrée sur les figures 1 à 5, la coiffe 22 est associée ou bien prévue pour être associée à une prothèse 23, visible sur la figure 1, pour constituer ensemble une capsule 3 destinée à remplacer de manière définitive une dent d'un patient. Plus particulièrement, la prothèse 23 est scellée sur la coiffe 22.

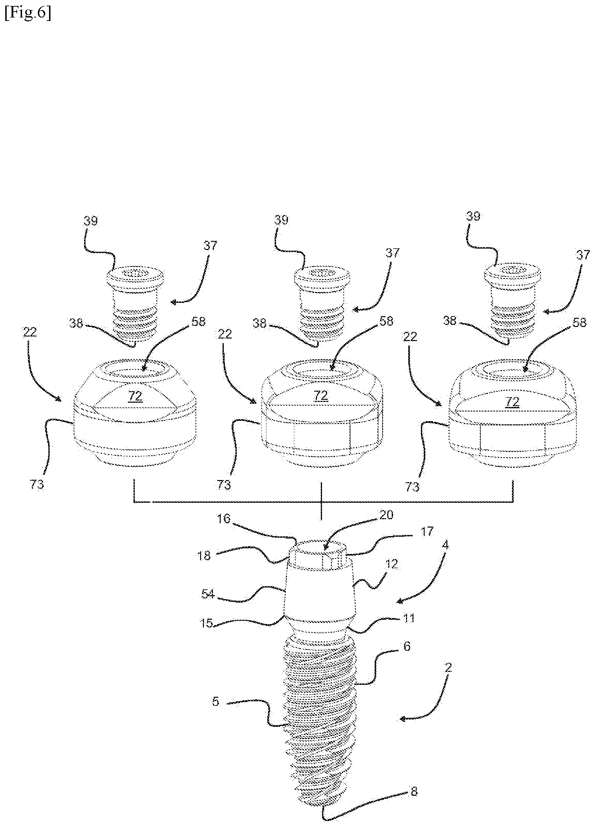

Selon une autre variante illustrée sur la figure 6, la coiffe 22 est une coiffe de cicatrisation prévue pour être implantée temporairement sur un patient.

On note à ce stade de la description que la présente invention qui porte notamment sur la manière dont la coiffe 22 est maintenue sur le pilier 4 s'applique indifféremment à une coiffe 22 pourvue d'une prothèse 23 ou bien à une coiffe de cicatrisation exempte d'une telle prothèse.

L'implant 2 est destiné à être fixé, notamment par vissage ou analogue, à l'intérieur de l'os du patient. A cet effet, l'implant 2 comporte une surface extérieure d'implant 5 qui est pourvue d'une, voire plusieurs, rampe de vissage 6, notamment agencée en une hélice, dont un axe de révolution A2 est confondu avec l'axe d'allongement A1. Le long de l'axe d'allongement A1, l'implant 2 s'étend entre une surface inférieure d'implant 7 et une surface supérieure d'implant 8 qui sont sensiblement orthogonales à l'axe d'allongement A1. La face inférieure d'implant 7 est celle qui est prévue pour être placée le plus en profondeur à l'intérieur de l'os du patient.

L'implant 2 comprend un canal axial d'implant 9 qui est débouchant à travers la surface supérieure d'implant 8 et qui est non débouchant à travers la surface inférieure d'implant 7. Ainsi, le canal axial d'implant 9 comporte une ouverture axiale d'implant 10 à travers laquelle le pilier 4 est introduit à l'intérieur du canal axial d'implant 9. Le canal axial d'implant 9 s'étend parallèlement à l'axe d'allongement A1.

Le pilier 4 comporte un corps de pilier 11 qui est prévu pour être logé à l'intérieur du canal axial d'implant 9 et une tête de pilier 12 qui est prévue pour émerger au-dessus de l'ouverture axiale d'implant 10. Autrement dit, le pilier 4 est formé d'un ensemble monobloc constitué de la tête de pilier 12 et du corps de pilier 11. Selon la variante illustrée, le pilier 4 est un pilier droit dans le sens où le corps de pilier 11 et la tête de pilier 12 s'étendent tous les deux selon un axe respectif qui est confondu avec l'axe d'allongement A1. Selon la variante illustrée encore, le corps de pilier 11 comporte un dégagement de matière 13 qui permet un indexage du pilier 4 à l'intérieur de l'ouverture axiale d'implant 10, de manière à éviter une rotation du pilier 4 sur lui-même à l'intérieur de l'ouverture axiale d'implant 10 autour de l'axe d'allongement A1. De préférence, le dégagement de matière 13 est ménagé à une extrémité inférieure de pilier 14 qui est celle disposée au fond de l'ouverture axiale d'implant 10. Le dégagement de matière 13 est par exemple complémentaire à un surplus de matière de l'implant 2 qui vient s'encastrer à l'intérieur du dégagement de matière 13. Selon une autre variante de réalisation, le corps de pilier 11 est exempt d'un tel dégagement de matière.

Le corps de pilier 11 est globalement agencé en un cône évasé vers la tête de pilier 12. Autrement dit, une section transversale S du pilier 4 prise orthogonalement à l'axe d'allongement A1 tend à s'accroître depuis l'extrémité inférieure de pilier 14 jusqu'à une collerette 15 qui délimite le corps de pilier 11 et la tête de pilier 12. La tête de pilier 12 est agencée en un cône dont la section transversale S tend à diminuer entre la collerette 15 et une extrémité supérieure de pilier 16. Plus particulièrement, la tête de pilier 12 est agencée en une première portion de cône 91 ce qui confère à la tête de pilier 12 un agencement tronconique. L'extrémité supérieure de pilier 16 est agencée en une couronne axiale 17 qui est munie d'au moins un doigt radial 18 prévu pour indexer un positionnement de la capsule 3 sur le pilier 4. L'extrémité supérieure de pilier 16 est axialement opposée à l'extrémité inférieure de pilier 14.

Le pilier 4 comprend un canal axial de pilier 19 qui est débouchant à travers l'extrémité supérieure de pilier 16 et l'extrémité inférieure de pilier 14. Ainsi, le canal axial de pilier 19 s'étend entre une ouverture supérieure de pilier 20 et une ouverture inférieure de pilier 21. Le canal axial de pilier 19 s'étend parallèlement à l'axe d'allongement A1 selon la variante illustrée.

Le corps de pilier 11, et consécutivement le pilier 4, est rapporté sur l'implant 2 par l'intermédiaire de moyens de fixation 24 du corps de pilier 11 au moins partiellement à l'intérieur du canal axial d'implant 9.

Les moyens de fixation 24 comprennent une vis de fixation de pilier 25 qui comporte une extrémité inférieure de vis de pilier 26 et une extrémité supérieure de vis de pilier 27, la vis de fixation de pilier 25 s'étendant le long de l'axe d'allongement A1 entre l'extrémité inférieure de vis de pilier 26 et l'extrémité supérieure de vis de pilier 27. L'extrémité inférieure de vis de pilier 26 est équipée d'un filetage de vis de pilier 28 coopérant avec un filetage d'implant 29, qui est complémentaire au filetage de vis de pilier 28 et qui est ménagé dans l'implant 2, plus particulièrement sur une surface interne d'implant 30 délimitant le canal axial d'implant 9. L'extrémité supérieure de vis de pilier 27 comporte une tête de vis de pilier 31 pourvue par exemple d'un alésage six-pans de pilier 32 qui permet avec un outil approprié de transvisser le pilier 4 sur l'implant 2. La tête de vis de pilier 31 vient en contact étroit contre un épaulement de pilier 33 ménagé sur la surface interne de pilier 42 de façon à fixer de manière fiable et inamovible le pilier 4 sur l'implant 2, de telle sorte que le pilier 4, et notamment la tête de pilier 12, demeure immobile.

La tête de pilier 12 reçoit la coiffe 22 par l'intermédiaire de moyens de rétention 34 qui assurent un maintien fiable et amovible de la coiffe 22 sur la tête de pilier 12.

Les moyens de rétention 34 comprennent avantageusement des moyens de vissage 35a de la coiffe 22 sur la tête de pilier 12 et des moyens d'emboîtement 35b de la tête de pilier 12 à l'intérieur d'une cavité 36 ménagée à l'intérieur de la coiffe 22. Autrement dit, les moyens de rétention 34 associent à la fois des moyens de vissage 35a de la coiffe 22 sur la tête de pilier 12 et des moyens d'emboîtement 35b en contact étroit de la tête de pilier 12 à l'intérieur de la cavité 36. Autrement dit, la coiffe 22 est maintenue de manière amovible sur la tête de pilier 12 à la fois par les moyens de vissage 35a de la coiffe 22 sur la tête de pilier 12 et par un agencement en cône morse de la tête de pilier 12 et de la cavité 36 de la coiffe 22. On comprend encore que la coiffe 22 est à la fois emmanchée et vissée sur la tête de pilier 12 à partir des moyens de rétention 34 par emboîtement et par vissage qui coopèrent entre eux.

Avantageusement, ces dispositions sont telles que les moyens de rétention 34 sont fiables et robustes, tout en offrant une certaine flexibilité d'utilisation, les moyens de vissage 35a étant mis en œuvre ou non par un praticien pour rapporter la coiffe 22 sur le pilier 4.

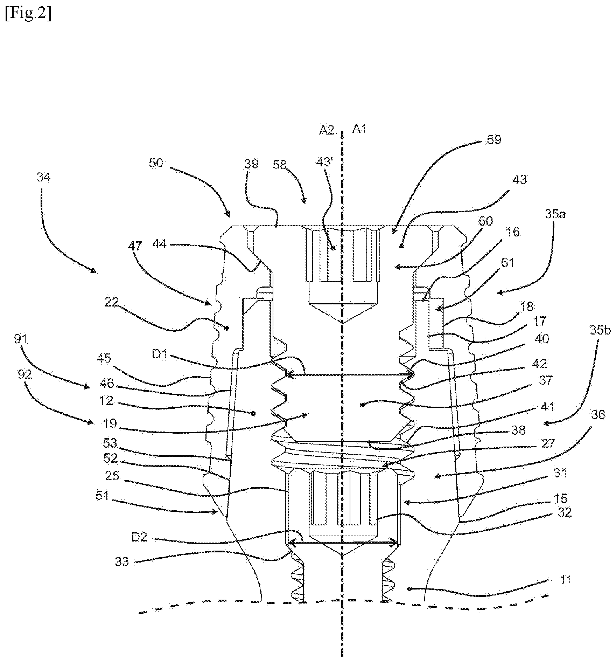

En se reportant également sur la figure 2, la coiffe 22 est rapportée sur la tête de pilier 12 par l'intermédiaire des moyens de vissage 35a de la coiffe 22 sur la tête de pilier 12. Les moyens de vissage 35a comprennent une vis de fixation de coiffe 37 qui comporte une extrémité inférieure de vis de coiffe 38 et une extrémité supérieure de vis de coiffe 39, la vis de fixation de coiffe 37 s'étendant le long de l'axe d'allongement A1 entre l'extrémité inférieure de vis de coiffe 38 et l'extrémité supérieure de vis de coiffe 39. L'extrémité inférieure de vis de coiffe 37 est équipée d'un filetage de vis de coiffe 40 coopérant avec un filetage de pilier 41, qui est complémentaire au filetage de vis de coiffe 40 et qui est ménagé dans le pilier 4, plus particulièrement sur la tête de pilier 12, et plus particulièrement encore sur une surface interne de pilier 42 délimitant le canal axial de pilier 19. L'extrémité supérieure de vis de coiffe 39 comporte une tête de vis de coiffe 43 pourvue par exemple d'un alésage six-pans de coiffe 43' qui permet avec un outil approprié de visser la coiffe 22 sur la tête de pilier 12. La tête de vis de coiffe 43 vient en contact étroit contre un épaulement de coiffe 44 ménagé sur une face interne de coiffe 46 de manière à fixer de manière fiable la coiffe 22 sur le pilier 4.

On note à ce stade de la description qu'un premier diamètre minimal D1 du canal axial de pilier 19 est supérieur à un deuxième diamètre maximal D2 de la vis de fixation de pilier 25, pour permettre à la vis de fixation de pilier 25 de circuler à l'intérieur du canal axial de pilier 19. Le premier diamètre minimal D1 du canal axial de pilier 19 est mesuré orthogonalement à l'axe d'allongement A1 entre deux éléments diamétralement opposés les plus proches de la surface interne de pilier 42, tels que des points du filetage de pilier 41. Le deuxième diamètre maximal D2 de la vis de fixation de pilier 25 est mesuré orthogonalement à l'axe d'allongement A1 entre deux éléments diamétralement opposés les plus proches de la vis de fixation de pilier 25, tels que des points de la tête de vis de pilier 31.

La coiffe 22 est également rapportée sur la tête de pilier 12 par l'intermédiaire des moyens de d'emboîtement 35b de la coiffe 22 sur la tête de pilier 12. L' agencement tronconique de la tête de pilier 12 décrit précédemment est complémentaire d'un agencement tronconique de la cavité 36 ménagée à l'intérieur de la coiffe 22.

A cet effet, et selon la variante illustrée sur les figures 1 à 5, la coiffe 22 est globalement agencée en un manchon délimité par une face externe de coiffe 45 et la face interne de coiffe 46. La face externe de coiffe 45 est pourvue de rainures de coiffe 47 qui sont conformées de manière complémentaire à des rainures de prothèse 48 ménagée sur une face interne de prothèse 49, tel que plus particulièrement illustré sur la figure 1. La face interne de coiffe 46 est la surface qui délimite au moins partiellement la cavité 36 et qui est agencé au moins partiellement en une deuxième portion de cône 92 de conformation complémentaire à la première portion de cône 91 selon laquelle est agencée la tête de pilier 12.

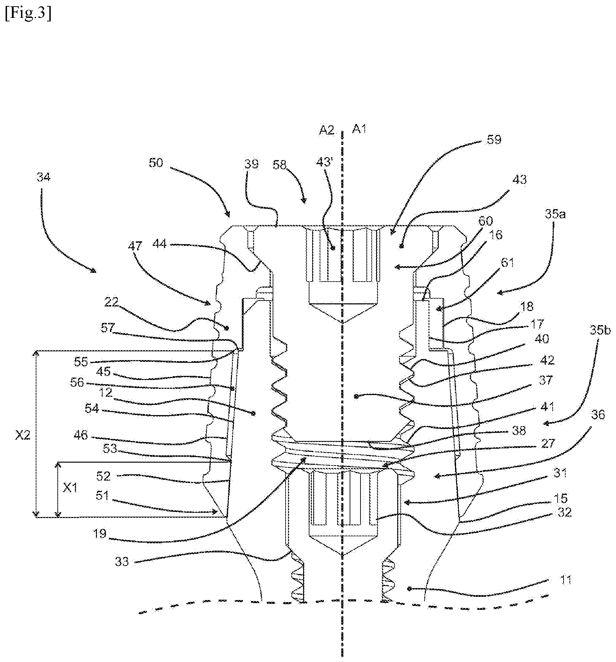

En se reportant également sur la figure 3, la coiffe 22 s'étend axialement le long de l'axe d'allongement A1 entre une extrémité supérieure de coiffe 50 et une extrémité inférieure de coiffe 51. L'extrémité inférieure de coiffe 51 est disposée de préférence au voisinage de la collerette 15 qui délimite le corps de pilier 11 et la tête de pilier 12. La face interne de coiffe 46 est pourvue d'une patte 52 qui s'étend radialement autour de l'axe d'allongement A1 et qui s'étend axialement depuis l'extrémité inférieure de coiffe 51 jusqu'à un point de contact 53. La patte 52 forme une surface de contact prévue pour venir en contact contre une face externe de pilier 54 qui délimite extérieurement la tête de pilier 12 et qui est agencée de manière tronconique. Le point de contact 53 est ménagé à une première distance X1, prise entre l'extrémité inférieure de coiffe 51 et le point de contact 53 parallèlement à l'axe d'allongement A1, qui est inférieure à une deuxième distance X2, prise parallèlement à l'axe d'allongement A1 entre l'extrémité inférieure de coiffe 51 et un rebord de cône 55 que comprend la face interne de coiffe 46. La première distance X1 est préférentiellement inférieure à une moitié de la deuxième distance X2, préférentiellement encore inférieure à un quart de la deuxième distance X2. La patte 52 a pour fonction d'assurer une étanchéité entre la coiffe 22 et la tête de pilier 12 pour éviter à des salissures de s'insérer entre la coiffe 22 et la tête de pilier 12. On comprend qu'un espacement 56 est ménagé entre le point de contact 53 et le rebord de cône 55 entre la face externe de pilier 54 et la face interne de coiffe 46. Cet espacement 56 réduit un contact entre la tête de pilier 12 et la coiffe 22, ce qui diminue un maintien par emboîtement de la capsule 3 sur la tête de pilier 12, cette diminution étant compensée par les moyens de vissage 35a de la capsule 3 sur la tête de pilier 12. On note ici l'association avantageuse des moyens de vissage 35a et des moyens d'emboîtement 35b, la diminution de l'un étant compensée par la présence de l'autre. Il en découle finalement une facilité de mise en place et une optimisation de fixation de la coiffe 22 sur la tête de pilier 12, tout en garantissant une aisance de retrait de coiffe 22 par l'intermédiaire d'une mise en œuvre des moyens de vissage 35a en premier lieu, puis des moyens d'emboîtement 35b.

On note ainsi que l'agencement en cône de la face interne de coiffe 46 s'étend axialement au moins entre l'extrémité inférieure de coiffe 51 et le point de contact 53, et plus généralement entre l'extrémité inférieure de coiffe 51 et le rebord de cône 55.

On note aussi que l'agencement en cône de la face externe de pilier 54 s'étend axialement entre la collerette 15 et le point de contact 53, et plus généralement entre la collerette 15 et un bord de cône 57 que comporte la face externe de pilier 54. Le bord de cône 57 est disposé en vis-à-vis, et préférentiellement au contact du rebord de cône 55. On remarque également que la couronne axiale 17 de la tête de pilier 12 s'étend axialement entre le bord de cône 57 et l'extrémité supérieure de pilier 16.

L'extrémité supérieure de coiffe 50 est pourvue d'une ouverture supérieure de coiffe 58 qui permet une introduction de la vis de fixation de coiffe 37 à l'intérieur d'un canal axial de coiffe 59 qui s'étend axialement entre l'extrémité supérieure de coiffe 50 et l'extrémité inférieure de coiffe 51 et qui comprend la cavité 36. Plus particulièrement, le canal axial de coiffe 59 comprend une zone supérieure 60 qui est destinée à loger la tête de vis de coiffe 43 et qui est délimitée au moins partiellement par l'épaulement de coiffe 44. La zone supérieure 60 surplombe une zone intermédiaire 61, que comporte également le canal axial de coiffe 59 et qui est destinée à loger la couronne axiale 17 de la tête de pilier 12 et les doigts radiaux 18. La zone intermédiaire 61 est interposée entre la zone supérieure 60 et la cavité 36.

En se reportant à nouveau sur la figure 1, la prothèse 23 est équipée d'un canal axial de prothèse 62 qui s'étend axialement entre une face supérieure de prothèse 63 et un orifice 64 qui est conformé pour recevoir la coiffe 22. Le canal axial de prothèse 62 s'étend principalement selon l'axe d'allongement A1. L'orifice 64 est notamment délimité par la face interne de prothèse 49. Plus particulièrement, le canal axial de prothèse 62 s'étend entre une ouverture supérieure de prothèse 65 et l'orifice 64. Le canal axial de prothèse 62 comprend une chambre 66 qui s'étend radialement au-dessus de la coiffe 22. Autrement dit, la chambre 66 surplombe la coiffe 22 de telle sorte que la tête de vis de coiffe 43 se loge à l'intérieur de la chambre 66 lors d'une opération de dévissage de la vis de fixation de coiffe 37 à l'aide d'un outil approprié logé à l'intérieur du canal axial de prothèse 62 qui est utilisé pour dévisser la vis de fixation de coiffe 37. On remarque qu'un diamètre de canal Y1 pris orthogonalement à l'axe d'allongement A1 entre deux points diamétralement opposés du canal axial de prothèse 62 est notoirement inférieur à un diamètre de chambre Y2 pris orthogonalement à l'axe d'allongement A1 entre deux points diamétralement opposés de la chambre 66. En effet, le canal axial de prothèse 62 est conformé pour permettre un passage de l'outil susvisé tandis que la chambre 66 est conformée pour loger la tête de vis de coiffe 43.

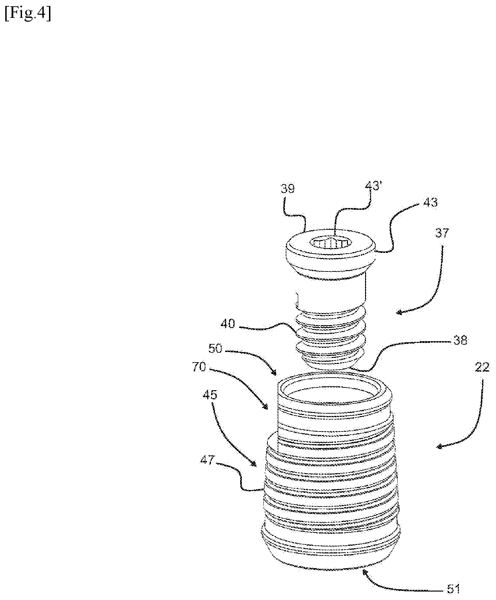

Sur la figure 4, la coiffe 22, et plus particulièrement la face externe de coiffe 45 est pourvue d'un méplat d'indexation 70 qui est destiné à orienter la prothèse 23 lors d'un scellage de la prothèse 23 et de la coiffe 22 ensemble.

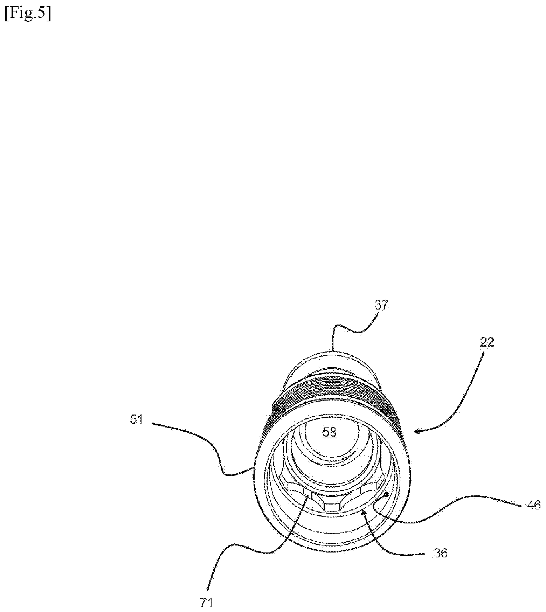

Sur la figure 5, la face interne de coiffe 46 qui délimite au moins partiellement la cavité 36 est pourvue d'au moins un organe 71 apte à coopérer avec le doigt radial 18 du piler 12 de manière à indexer la coiffe 22 sur le pilier 4.

Sur la figure 6, le pilier 4 transvissé à l'intérieur de l'implant 2 est apte à recevoir trois coiffes 22 distinctes, coiffes de cicatrisation dans ce cas-là, qui sont pourvues chacune d'un méplat d'empreinte 72 formant une zone de référence de la coiffe 22 à laquelle le méplat d'empreinte 72 est affecté. On comprend que le pilier 4 est apte à recevoir des coiffes de forme variée comprenant notamment une surface périphérique 73 de section globalement circulaire, triangulaire ou carrée, telle que représentée de gauche à droite pour les coiffes 22.

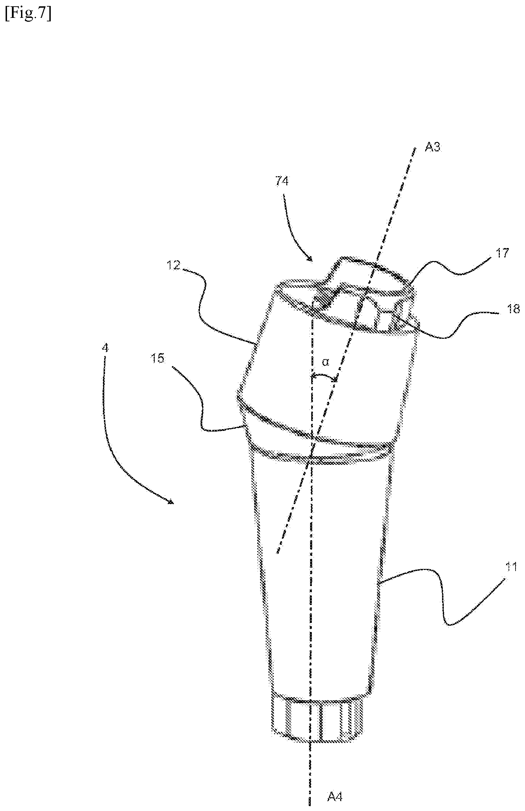

Sur la figure 7, le pilier 4 est un pilier angulé dont la tête de pilier 12 et le corps de pilier 11 s'étendent selon des axes d'élongation respectifs A3, A4 formant entre eux un angle aigu α qui est non-nul est préférentiellement compris entre 5° et 25°.

## Revendications

1. Dispositif prothétique dentaire (1) s'étendant le long d'un axe d'allongement (A1) et comprenant au moins un implant (2), une coiffe (22) et un pilier (4) qui est interposé entre l'implant (2) et la coiffe (22), le pilier (4) comprenant un corps de pilier (11) pourvu de moyens de fixation (24) sur l'implant (2), le pilier (4) comprenant une tête de pilier (12) qui est délimitée au moins partiellement par une face externe de pilier (54) et qui est équipée de moyens de rétention (34) de la coiffe (22), les moyens de rétention (34) comprenant des moyens d'emboîtement (35b) de la tête de pilier (12) à l'intérieur d'une cavité (36) qui est ménagée à l'intérieur de la coiffe (22) et qui est délimitée au moins partiellement par une face interne de coiffe (46), les moyens d'emboîtement (35b) comprenant un agencement tronconique de la tête de pilier (12) et un agencement tronconique complémentaire de la cavité (36), les moyens de rétention (34) comprenant des moyens de vissage (35a) de la coiffe (22) sur la tête de pilier (12), la face interne de coiffe (46) étant pourvue d'une patte (52) qui est en contact contre la face externe de pilier (54) et d'un espacement (56) qui s'étend radialement entre la face externe de pilier (54) et la face interne de coiffe (46), **caractérisé en ce que** la patte (52) s'étend axialement depuis une extrémité inférieure de coiffe (51) jusqu'à un point de contact (53) de la face interne de coiffe (46) et **en ce que** l'espacement (56) est ménagé axialement entre le point de contact (53) et un rebord de cône (55) de la face interne de coiffe (46).

2. Dispositif prothétique dentaire (1) selon la revendication 1, **caractérisé en ce que** la patte (52) s'étend radialement autour de l'axe d'allongement (A1) du dispositif prothétique dentaire (1).

3. Dispositif prothétique dentaire (1) selon l'une quelconque des revendications précédentes, **caractérisé en ce que** la patte (52) forme un organe d'étanchéité entre la coiffe (22) et la tête de pilier (12), l'organe d'étanchéité étant agencé pour éviter à des salissures de s'insérer entre la coiffe (22) et la tête de pilier (12).

4. Dispositif prothétique dentaire (1) selon l'une quelconque des revendications 2 et 3, **caractérisé en ce que** le point de contact (53) est ménagé à une première distance (X1) de l'extrémité inférieure de coiffe (51) qui est inférieure à une deuxième distance (X2) prise entre l'extrémité inférieure de coiffe (51) et le rebord de cône (55).

5. Dispositif prothétique dentaire (1) selon la revendication 4, **caractérisé en ce que** la première distance (X1) est inférieure à une moitié de la deuxième distance (X2).

6. Dispositif prothétique dentaire (1) selon l'une quelconque des revendications 4 et 5, **caractérisé en ce que** la première distance (X1) est inférieure à un quart de la deuxième distance (X2).

7. Dispositif prothétique dentaire (1) selon l'une quelconque des revendications 2 à 6, **caractérisé en ce que** l'extrémité inférieure de coiffe (51) jouxte une collerette (15) qui délimite le corps de pilier (11) et la tête de pilier (12).

8. Dispositif prothétique dentaire (1) selon l'une quelconque des revendications précédentes, **caractérisé en ce que** la tête de pilier (12) est agencée au moins partiellement en une première portion de cône (91) de conformation complémentaire à une deuxième portion de cône (92) selon laquelle est agencée au moins partiellement la face interne de coiffe (46).

9. Dispositif prothétique dentaire (1) selon la revendication 8, **caractérisé en ce que** la deuxième portion de cône (92) s'étend axialement au moins entre l'extrémité inférieure de coiffe (51) et le rebord de cône (55).

10. Dispositif prothétique dentaire (1) selon la revendication 9, **caractérisé en ce que** la deuxième portion de cône (92) s'étend axialement entre l'extrémité inférieure de coiffe (51) et le point de contact (53).

11. Dispositif prothétique dentaire (1) selon l'une quelconque des revendications 8 à 10, **caractérisé en ce que** la première portion de cône (91) s'étend axialement au moins entre la collerette (15) et un bord de cône (57) que comporte la face externe de pilier (54).

12. Dispositif prothétique dentaire (1) selon la revendication 11, **caractérisé en ce que** la première portion de cône (91) s'étend axialement entre la collerette (15) et le point de contact (53).

13. Dispositif prothétique dentaire (1) selon l'une quelconque des revendications 11 et 12, **caractérisé en ce que** le bord de cône (57) est disposé en vis-à-vis du rebord de cône (55).

14. Dispositif prothétique dentaire (1) selon l'une quelconque des revendications 11 à 13, **caractérisé en ce que** le bord de cône (57) est en contact avec le rebord de cône (55).

15. Dispositif prothétique dentaire (1) selon l'une quelconque des revendications 11 à 14, **caractérisé en ce que** la tête de pilier (12) comprend une couronne axiale (17) qui s'étend axialement entre le bord de cône (57) et une extrémité supérieure de pilier (16).

16. Dispositif prothétique dentaire (1) selon l'une quelconque des revendications précédentes, **caractérisé en ce que** le pilier (4) est formé d'un ensemble monobloc comprenant la tête de pilier (12) et le corps de pilier (11).

17. Dispositif prothétique dentaire (1) selon l'une quelconque des revendications précédentes, **caractérisé en ce que** les moyens de vissage (35a) comprennent une vis de fixation de coiffe (37) au moins partiellement logée à l'intérieur d'un canal axial de pilier (19) que comporte le pilier (4).

18. Dispositif prothétique dentaire (1) selon la revendication 17, **caractérisé en ce qu'**un premier diamètre minimal (D1) du canal axial de pilier (19) est supérieur à un deuxième diamètre maximal (D2) de la vis de fixation de pilier (25).

19. Dispositif prothétique dentaire (1) selon l'une quelconque des revendications 17 et 18, **caractérisé en ce que** la vis de fixation de coiffe (37) comprend une extrémité inférieure de vis de coiffe (38) qui est pourvue d'un filetage de vis de coiffe (40) coopérant avec un filetage de pilier (41) qui est complémentaire au filetage de vis de coiffe (40) et qui est ménagé sur une surface interne de pilier (42) délimitant le canal axial de pilier (19).

20. Dispositif prothétique dentaire (1) selon l'une quelconque des revendications 17 à 19, **caractérisé en ce que** la vis de fixation de coiffe (37) comprend une extrémité supérieure de vis de coiffe (39) comportant une tête de vis de coiffe (43) qui est en contact contre un épaulement de coiffe (44) ménagé sur la face interne de coiffe (46).

21. Dispositif prothétique dentaire (1) selon la revendication 20, **caractérisé en ce que** la vis de fixation de coiffe (37) s'étend au moins partiellement à l'intérieur d'un canal axial de coiffe (59) comprenant une zone supérieure (60) qui loge la tête de vis de coiffe (43) et qui est délimitée au moins partiellement par l'épaulement de coiffe (44).

22. Dispositif prothétique dentaire (1) selon les revendications 15 et 21, **caractérisé en ce que** le canal axial de coiffe (59) comprend une zone intermédiaire (61) qui loge la couronne axiale (17) et au moins un doigt radial (18) que comporte la tête de pilier (12).

23. Dispositif prothétique dentaire (1) selon la revendication 22, **caractérisé en ce que** la zone intermédiaire (61) est interposée entre la zone supérieure (60) et la cavité (36).

24. Dispositif prothétique dentaire (1) selon les revendications 2, 15 et 17, **caractérisé en ce que** la coiffe (22) s'étend axialement entre une extrémité supérieure de coiffe (50) et l'extrémité inférieure de coiffe (51). l'extrémité supérieure de coiffe (50) étant pourvue d'une ouverture supérieure de coiffe (58) qui est conformée pour permettre une introduction de la vis de fixation de coiffe (37) à l'intérieur du canal axial de coiffe (59) qui s'étend axialement entre l'extrémité supérieure de coiffe (50) et l'extrémité inférieure de coiffe (51) et qui comprend la cavité (36).

25. Dispositif prothétique dentaire (1) selon les revendications 20 et 24, **caractérisé en ce que** le canal axial de coiffe (59) comprend une zone supérieure (60) qui est destinée à loger la tête de vis de coiffe (43) et qui est délimitée au moins partiellement par l'épaulement de coiffe (44).

26. Dispositif prothétique dentaire (1) selon les revendications 22 et 25, **caractérisé en ce que** la zone supérieure (60) surplombe une zone intermédiaire (61) du canal axial de coiffe (59), la zone intermédiaire (61) logeant la couronne axiale (17) de la tête de pilier (12) et le doigt radial (18).

27. Dispositif prothétique dentaire (1) selon la revendication 26, **caractérisé en ce que** la zone intermédiaire (61) est interposée entre la zone supérieure (60) et la cavité (36).

28. Dispositif prothétique dentaire (1) selon l'une quelconque des revendications précédentes, **caractérisé en ce que** la coiffe (22) est pourvue d'une prothèse (23).

29. Dispositif prothétique dentaire (1) selon la revendication 26, **caractérisé en ce que** la prothèse (23) est équipée d'un canal axial de prothèse (62) qui s'étend axialement entre une face supérieure de prothèse (63) et un orifice (64) qui est conformé pour recevoir la coiffe (22).

30. Dispositif prothétique dentaire (1) selon la revendication 29, **caractérisé en ce que** le canal axial de prothèse (62) s'étend entre une ouverture supérieure de prothèse (65) et l'orifice (64), le canal axial de prothèse (62) comprenant une chambre (66) qui surplombe la coiffe (22), la chambre (66) étant agencée pour loger la tête de vis de coiffe (43) lors d'une opération de dévissage de la vis de fixation de coiffe (37).

31. Dispositif prothétique dentaire (1) selon les revendications 2 et 30, **caractérisé en ce qu'**un diamètre de canal (Y1) pris orthogonalement à l'axe d'allongement (A1) entre deux points diamétralement opposés du canal axial de prothèse (62) est inférieur à un diamètre de chambre (Y2) pris orthogonalement à l'axe d'allongement (A1) entre deux points diamétralement opposés de la chambre (66).

32. Dispositif prothétique dentaire (1) selon les revendications 2 et 28, **caractérisé en ce que** la coiffe (22) comporte une face externe de coiffe (45) qui est pourvue d'un méplat d'indexation (70) destiné à indexer la prothèse (23) sur la coiffe (22).

33. Dispositif prothétique dentaire (1) selon l'une quelconque des revendications 22 à 32, **caractérisé en ce que** la face interne de coiffe (46) est pourvue d'au moins un organe (71) apte à coopérer avec le doigt radial (18) du piler (12) pour indexer la coiffe (22) sur le pilier (4).

## Patentansprüche

1. Zahnprothetische Vorrichtung (1), die sich entlang einer Ausdehnungsachse (A1) erstreckt und mindestens ein Implantat (2), eine Kappe (22) und einen Pfeiler (4) umfasst, der zwischen dem Implantat (2) und der Kappe (22) eingefügt ist, wobei der Pfeiler (4) einen Pfeilerkörper (11) umfasst, der mit Mitteln zur Befestigung (24) auf dem Implantat (2) versehen ist, wobei der Pfeiler (4) einen Pfeilerkopf (12) umfasst, der mindestens teilweise von einer äußeren Pfeilerseite (54) begrenzt wird und der mit Mitteln zum Halten (34) der Kappe (22) ausgestattet ist, wobei die Haltemittel (34) Mittel zum Einpassen (35b) des Pfeilerkopfes (12) in das Innere eines Hohlraums (36) umfassen, der im Inneren der Kappe (22) ausgestaltet ist und der mindestens teilweise von einer inneren Kappenseite (46) begrenzt wird, wobei die Einpassmittel (35b) eine kegelstumpfförmige Anordnung des Pfeilerkopfes (12) und eine komplementäre kegelstumpfförmige Anordnung des Hohlraums (36) umfassen, wobei die Haltemittel (34) Mittel zum Schrauben (35a) der Kappe (22) auf den Pfeilerkopf (12) umfassen, wobei die innere Kappenseite (46) mit einer Klaue (52), die sich an der äußeren Pfeilerseite (54) in Kontakt befindet, und einem Spalt (56) versehen ist, der sich radial zwischen der äußeren Pfeilerseite (54) und der inneren Kappenseite (46) erstreckt, **dadurch gekennzeichnet, dass** sich die Klaue (52) axial von einem unteren Kappenende (51) bis zu einem Kontaktpunkt (53) der inneren Kappenseite (46) erstreckt, und dadurch, dass der Spalt (56) axial zwischen dem Kontaktpunkt (53) und einem Kegelrand (55) der inneren Kappenseite (46) ausgestaltet ist.

2. Zahnprothetische Vorrichtung (1) nach Anspruch 1, **dadurch gekennzeichnet, dass** sich die Klaue (52) radial um die Ausdehnungsachse (A1) der zahnprothetischen Vorrichtung (1) herum erstreckt.

3. Zahnprothetische Vorrichtung (1) nach einem der vorstehenden Ansprüche, **dadurch gekennzeichnet, dass** die Klaue (52) ein Dichtungsorgan zwischen der Kappe (22) und dem Pfeilerkopf (12) bildet, wobei das Dichtungsorgan so angeordnet ist, dass es verhindert, dass Verschmutzungen zwischen der Kappe (22) und dem Pfeilerkopf (12) eindringen.

4. Zahnprothetische Vorrichtung (1) nach einem der Ansprüche 2 und 3, **dadurch gekennzeichnet, dass** der Kontaktpunkt (53) in einem ersten Abstand (X1) vom unteren Kappenende (51) ausgestaltet ist, der kleiner ist als ein zweiter Abstand (X2), der zwischen dem unteren Kappenende (51) und dem Kegelrand (55) gemessen wird.

5. Zahnprothetische Vorrichtung (1) nach Anspruch 4, **dadurch gekennzeichnet, dass** der erste Abstand (X1) kleiner ist als eine Hälfte des zweiten Abstands (X2).

6. Zahnprothetische Vorrichtung (1) nach einem der Ansprüche 4 und 5, **dadurch gekennzeichnet, dass** der erste Abstand (X1) kleiner ist als ein Viertel des zweiten Abstands (X2).

7. Zahnprothetische Vorrichtung (1) nach einem der Ansprüche 2 bis 6, **dadurch gekennzeichnet, dass** das untere Kappenende (51) an einen Kragen (15) angrenzt, der den Pfeilerkörper (11) und den Pfeilerkopf (12) begrenzt.

8. Zahnprothetische Vorrichtung (1) nach einem der vorstehenden Ansprüche, **dadurch gekennzeichnet, dass** der Pfeilerkopf (12) mindestens teilweise in einem ersten Kegelabschnitt (91) angeordnet ist, der von komplementärer Ausbildung zu einem zweiten Kegelabschnitt (92) ist, dem entlang mindestens teilweise die innere Kappenseite (46) angeordnet ist.

9. Zahnprothetische Vorrichtung (1) nach Anspruch 8, **dadurch gekennzeichnet, dass** sich der zweite Kegelabschnitt (92) axial mindestens zwischen dem unteren Kappenende (51) und dem Kegelrand (55) erstreckt.

10. Zahnprothetische Vorrichtung (1) nach Anspruch 9, **dadurch gekennzeichnet, dass** sich der zweite Kegelabschnitt (92) axial zwischen dem unteren Kappenende (51) und dem Kontaktpunkt (53) erstreckt.

11. Zahnprothetische Vorrichtung (1) nach einem der Ansprüche 8 bis 10, **dadurch gekennzeichnet, dass** sich der erste Kegelabschnitt (91) axial mindestens zwischen dem Kragen (15) und einer Kegelkante (57), die die äußere Pfeilerseite (54) umfasst, erstreckt.

12. Zahnprothetische Vorrichtung (1) nach Anspruch 11, **dadurch gekennzeichnet, dass** sich der erste Kegelabschnitt (91) axial zwischen dem Kragen (15) und dem Kontaktpunkt (53) erstreckt.

13. Zahnprothetische Vorrichtung (1) nach einem der Ansprüche 11 und 12, **dadurch gekennzeichnet, dass** die Kegelkante (57) dem Kegelrand (55) gegenüber angeordnet ist.

14. Zahnprothetische Vorrichtung (1) nach einem der Ansprüche 11 bis 13, **dadurch gekennzeichnet, dass** sich die Kegelkante (57) mit dem Kegelrand (55) in Kontakt befindet.

15. Zahnprothetische Vorrichtung (1) nach einem der Ansprüche 11 bis 14, **dadurch gekennzeichnet, dass** der Pfeilerkopf (12) einen axialen Kranz (17) umfasst, der sich axial zwischen der Kegelkante (57) und einem oberen Pfeilerende (16) erstreckt.

16. Zahnprothetische Vorrichtung (1) nach einem der vorstehenden Ansprüche, **dadurch gekennzeichnet, dass** der Pfeiler (4) von einer einteiligen Baugruppe gebildet wird, die den Pfeilerkopf (12) und den Pfeilerkörper (11) umfasst.

17. Zahnprothetische Vorrichtung (1) nach einem der vorstehenden Ansprüche, **dadurch gekennzeichnet, dass** die Schraubmittel (35a) eine Kappenbefestigungsschraube (37) umfassen, die mindestens teilweise im Inneren eines axialen Pfeilerkanals (19), den der Pfeiler (4) umfasst, aufgenommen ist.

18. Zahnprothetische Vorrichtung (1) nach Anspruch 17, **dadurch gekennzeichnet, dass** ein erster minimaler Durchmesser (D1) des axialen Pfeilerkanals (19) größer ist als ein zweiter maximaler Durchmesser (D2) der Pfeilerbefestigungsschraube (25).

19. Zahnprothetische Vorrichtung (1) nach einem der Ansprüche 17 und 18, **dadurch gekennzeichnet, dass** die Kappenbefestigungsschraube (37) ein unteres Kappenschraubenende (38) umfasst, das mit einem Kappenschraubengewinde (40) versehen ist, das mit einem Pfeilergewinde (41) zusammenwirkt, das zum Kappenschraubengewinde (40) komplementär ist und das an einer Pfeilerinnenfläche (42), die den axialen Pfeilerkanal (19) begrenzt, ausgestaltet ist.

20. Zahnprothetische Vorrichtung (1) nach einem der Ansprüche 17 bis 19, **dadurch gekennzeichnet, dass** die Kappenbefestigungsschraube (37) ein oberes Kappenschraubenende (39) umfasst, das einen Kappenschraubenkopf (43) umfasst, der sich an einer Kappenschulter (44), die an der inneren Kappenseite (46) ausgestaltet ist, in Kontakt befindet.

21. Zahnprothetische Vorrichtung (1) nach Anspruch 20, **dadurch gekennzeichnet, dass** sich die Kappenbefestigungsschraube (37) mindestens teilweise im Inneren eines axialen Kappenkanals (59) erstreckt, der einen oberen Bereich (60) umfasst, der den Kappenschraubenkopf (43) aufnimmt und der mindestens teilweise von der Kappenschulter (44) begrenzt wird.

22. Zahnprothetische Vorrichtung (1) nach den Ansprüchen 15 und 21, **dadurch gekennzeichnet, dass** der axiale Kappenkanal (59) einen Zwischenbereich (61) umfasst, der den axialen Kranz (17) und mindestens einen radialen Finger (18), den der Pfeilerkopf (12) umfasst, aufnimmt.

23. Zahnprothetische Vorrichtung (1) nach Anspruch 22, **dadurch gekennzeichnet, dass** der Zwischenbereich (61) zwischen dem oberen Bereich (60) und dem Hohlraum (36) eingefügt ist.

24. Zahnprothetische Vorrichtung (1) nach den Ansprüchen 2, 15 und 17, **dadurch gekennzeichnet, dass** sich die Kappe (22) axial zwischen einem oberen Kappenende (50) und dem unteren Kappenende (51) erstreckt, wobei das obere Kappenende (50) mit einer oberen Kappenöffnung (58) versehen ist, die so ausgebildet ist, dass sie ein Einführen der Kappenbefestigungsschraube (37) in das Innere des axialen Kappenkanals (59), der sich axial zwischen dem oberen Kappenende (50) und dem unteren Kappenende (51) erstreckt und der den Hohlraum (36) umfasst, ermöglicht.

25. Zahnprothetische Vorrichtung (1) nach den Ansprüchen 20 und 24, **dadurch gekennzeichnet, dass** der axiale Kappenkanal (59) einen oberen Bereich (60) umfasst, der dazu bestimmt ist, den Kappenschraubenkopf (43) aufzunehmen, und der mindestens teilweise von der Kappenschulter (44) begrenzt wird.

26. Zahnprothetische Vorrichtung (1) nach den Ansprüchen 22 und 25, **dadurch gekennzeichnet, dass** der obere Bereich (60) einen Zwischenbereich (61) des axialen Kappenkanals (59) überlagert, wobei der Zwischenbereich (61) den axialen Kranz (17) des Pfeilerkopfes (12) und den radialen Finger (18) aufnimmt.

27. Zahnprothetische Vorrichtung (1) nach Anspruch 26, **dadurch gekennzeichnet, dass** der Zwischenbereich (61) zwischen dem oberen Bereich (60) und dem Hohlraum (36) eingefügt ist.

28. Zahnprothetische Vorrichtung (1) nach einem der vorstehenden Ansprüche, **dadurch gekennzeichnet, dass** die Kappe (22) mit einer Prothese (23) versehen ist.

29. Zahnprothetische Vorrichtung (1) nach Anspruch 26, **dadurch gekennzeichnet, dass** die Prothese (23) mit einem axialen Prothesenkanal (62) ausgestattet ist, der sich axial zwischen einer oberen Prothesenseite (63) und einem Loch (64), das so ausgebildet ist, dass es die Kappe (22) aufnimmt, erstreckt.

30. Zahnprothetische Vorrichtung (1) nach Anspruch 29, **dadurch gekennzeichnet, dass** sich der axiale Prothesenkanal (62) zwischen einer oberen Prothesenöffnung (65) und dem Loch (64) erstreckt, wobei der axiale Prothesenkanal (62) eine Kammer (66) umfasst, die die Kappe (22) überlagert, wobei die Kammer (66) so angeordnet ist, dass sie bei einem Vorgang des Herausschraubens der Kappenbefestigungsschraube (37) den Kappenschraubenkopf (43) aufnimmt.

31. Zahnprothetische Vorrichtung (1) nach den Ansprüchen 2 und 30, **dadurch gekennzeichnet, dass** ein Kanaldurchmesser (Y1), der orthogonal zur Ausdehnungsachse (A1) zwischen zwei diametral gegenüberliegenden Punkten des axialen Prothesenkanals (62) gemessen wird, kleiner ist als ein Kammerdurchmesser (Y2), der orthogonal zur Ausdehnungsachse (A1) zwischen zwei diametral gegenüberliegenden Punkten der Kammer (66) gemessen wird.

32. Zahnprothetische Vorrichtung (1) nach den Ansprüchen 2 und 28, **dadurch gekennzeichnet, dass** die Kappe (22) eine äußere Kappenseite (45) umfasst, die mit einer Indexierungsabflachung (70) versehen ist, die dazu bestimmt ist, die Prothese (23) an der Kappe (22) zu indexieren.

33. Zahnprothetische Vorrichtung (1) nach einem der Ansprüche 22 bis 32, **dadurch gekennzeichnet, dass** die innere Kappenseite (46) mit mindestens einem Organ (71) versehen ist, das in der Lage ist, mit dem radialen Finger (18) des Pfeilers (12) zusammenzuwirken, um die Kappe (22) am Pfeiler (4) zu indexieren.

## Claims

1. A dental prosthetic device (1) extending principally along an axis of extension (A1) and comprising at least one implant (2), one cap (22) and an abutment (4) which is interposed between the implant (2) and the cap (22), where the abutment (4) comprises an abutment body (11) provided with means of attachment (24) to the implant (2), where the abutment (4) comprises an abutment head (12) which is at least partially delimited by an outer abutment surface (54) and which is equipped with means (34) for retaining the cap (22), the retaining means (34) comprise means (35b) of interfitting the abutment head (12) inside a cavity (36) which is formed inside the cap (22) and which is at least partially delimited by an inner cap surface (46), the interfitting means (35b) comprise a frustoconical layout of the abutment head (12) and a complementary frustoconical layout of the cavity (36), the retaining means (34) comprise means (35a) for screwing the cap (22) onto the abutment head (12), the inner cap surface (46) is provided with a tab (52) which is in contact against the outer abutment surface (54), and a spacing (56)which extends radially between the outer abutment surface (54) and the inner cap surface (46), **characterized in that** the tab (52) extends axially from a lower cap end (51) to a contact point (53) of the inner cap surface (46) and **in that** the spacing (56) is arranged axially between the contact point (53) and a cone lip (55) of the inner cap surface (46).

2. The dental prosthetic device (1) according to claim 1, **characterized in that** the tab (52) extends radially around the axis of extension (A1) of the dental prosthetic device (1).

3. The dental prosthetic device (1) according to any one of the preceding claims, **characterized in that** the tab (52) forms a sealing member between the cap (22) and the abutment head (12), where the sealing member is laid out for avoiding the entry of dirt between the cap (22) and the abutment head (12).

4. The dental prosthetic device (1) according to any one of claims 2 and 3, **characterized in that** the contact point (53) is arranged at a first distance (X1) from the lower cap end (51) which is less than a second distance (X2) taken between the lower cap end (51) and the cone lip (55).

5. The dental prosthetic device (1) according to claim 4, **characterized in that** the first distance (X1) is preferably less than half of the second distance (X2).

6. The dental prosthetic device (1) according to any one of claims 4 and 5, **characterized in that** the first distance (X1) is less than one quarter of the second distance (X2).

7. The dental prosthetic device (1) according to any one of claims 2 to 6, **characterized in that** the lower cap end (51) adjoins a flange (15) which delimits the abutment body (11) and the abutment head (12).

8. The dental prosthetic device (1) according to any one of the preceding claims, **characterized in that** the abutment head (12) is laid out at least partially in a first conical portion (91) with a shape complementary to a second conical portion (92) according to which the inner cap surface (46) is at least partially laid out.

9. The dental prosthetic device (1) according to claim 8, **characterized in that** the second conical portion (92) extends axially at least between the lower cap end (51) and the cone lip (55).

10. The dental prosthetic device (1) according to claim 9, **characterized in that** the second conical portion (92) extends axially between the lower cap end (51) and the contact point (53).

11. The dental prosthetic device (1) according to any one of claims 8 to 10, **characterized in that** the first conical portion (91) extends axially at least between the flange (15) and a cone edge (57) which the outer abutment surface (54) comprises.

12. The dental prosthetic device (1) according to claim 11, **characterized in that** the first conical portion (91) extends axially between the flange (15) and the contact point (53).

13. The dental prosthetic device (1) according to any one of claims 11 and 12, **characterized in that** the cone edge (57) is arranged facing the cone lip (55).

14. The dental prosthetic device (1) according to any one of claims 11 to 13, **characterized in that** the cone edge (57) is in contact with the cone lip (55).

15. The dental prosthetic device (1) according to any one of claims 11 to 14, **characterized in that** the abutment head (12) comprises an axial crown (17) which extends axially between the cone edge (57) and an upper abutment end (16).

16. The dental prosthetic device (1) according to any one of the preceding claims, **characterized in that** the abutment (4) is formed of a single unit assembly comprising the abutment head (12) and the abutment body (11).

17. The dental prosthetic device (1) according to any one of the preceding claims, **characterized in that** the screwing means (35a) include a cap-attachment screw (37) at least partially housed inside an axial abutment channel (19) which the abutment (4) comprises.

18. The dental prosthetic device (1) according to claim 17, **characterized in that** a first minimum diameter (D1) of the axial abutment channel (19) is greater than a second maximum diameter (D2) of the abutment attachment screw (25).

19. The dental prosthetic device (1) according to any one of claims 17 and 18, **characterized in that** the cap-attachment screw (37) comprises a lower cap screw end (38) which is provided with a cap screw threading (40) engaging with an abutment threading (41) which is complementary to the cap screw threading (40) and which is arranged on an inner abutment surface (42) delimiting the axial abutment channel (19).

20. The dental prosthetic device (1) according to any one of claims 17 to 19, **characterized in that** the cap-attachment screw (37) comprises an upper cap screw end (39) comprising a cap screw head (43) which is in contact against a cap shoulder (44) arranged on the inner cap surface (46).

21. The dental prosthetic device (1) according to claim 20, **characterized in that** the cap-attachment screw (37) extends at least partially inside an axial cap channel (59) comprising an upper zone (60) which houses the cap screw head (43) and which is delimited at least partially by the cap shoulder (44).

22. The dental prosthetic device (1) according to claims 15 and 21, **characterized in that** the axial cap channel (59) comprises an intermediate zone (61) which houses the axial crown (17) and at least one radial finger (18) which the abutment head (12) comprises.

23. The dental prosthetic device (1) according to claim 22, **characterized in that** the intermediate zone (61) is interposed between the upper zone (60) and the cavity (36).

24. The dental prosthetic device (1) according to claim 2, 15 and 17, **characterized in that** the cap (22) extends axially between an upper cap end (50) and the lower cap end (51), where the upper cap end (50) is provided with an upper cap opening (58) which is shaped to allow insertion of the cap-attachment screw (37) inside the axial cap channel (59) which extends axially between the cap upper end (50) and the cap lower end (51) and which comprises the cavity (36).

25. The dental prosthetic device (1) according to claims 20 and 24, **characterized in that** the axial cap channel (59) comprises an upper zone (60) which is intended to house the cap screw head (43) and which is delimited at least partially by the cap shoulder (44).

26. The dental prosthetic device (1) according to claims 22 and 25, **characterized in that** the upper zone (60) extends above an intermediate zone (61) of the axial cap channel (59), where the intermediate zone (61) houses the axial crown (17) of the abutment head (12) and the radial finger (18).

27. The dental prosthetic device (1) according to claim 26, **characterized in that** the intermediate zone (61) is interposed between the upper zone (60) and the cavity (36).

28. The dental prosthetic device (1) according to any one of the preceding claims, **characterized in that** the cap (22) is provided with a prosthesis (23).

29. The dental prosthetic device (1) according to claim 26, **characterized in that** the prosthesis (23) is equipped with an axial prosthetic channel (62) which extends axially between an upper prosthetic surface (63) and an orifice (64) which is shaped for receiving the cap (22).

30. The dental prosthetic device (1) according to claim 29, **characterized in that** the axial prosthetic channel (62) extends between an upper prosthetic opening (65) and the orifice (64), where the axial prosthetic channel (62) comprises a chamber (66) extending above the cap (22), and where the chamber (66) is laid out for housing the cap screw head (43) during an operation of unscrewing the cap-attachment screw (37).

31. The dental prosthetic device (1) according to claims 2 and 30, **characterized in that** a channel diameter (Y1) taken orthogonally to the axis of extension (A1) between two diagonally opposite points of the axial prosthetic channel (62) is less than a chamber diameter (Y2) taken orthogonally to the axis of extension (A1) between two diametrically opposite points of the chamber (66).

32. The dental prosthetic device (1) according to claims 2 and 28, **characterized in that** the cap (22) comprises an outer cap surface (45) which is provided with an indexing flat (70) intended to index the prosthesis (23) on the cap (22).

33. The dental prosthetic device (1) according to any one of claims 22 to 32, **characterized in that** inner cap surface (46) is provided with at least one member (71) suited for engaging with the radial finger (18) of the [abutment head] (12) so as to index the cap (22) on the abutment (4).
